# FASCICULE DE BREVET EUROPEEN

(11) **EP 3 765 422 B1**
(45) Date de publication et mention de la délivrance du brevet: **20.12.2023**
(21) Numéro de dépôt: 19715177.2
(22) Date de dépôt: 13.03.2019
(51) Int. Cl.: C03B 37/04

(54) **DISPOSITIF POUR MODIFIER LA TEMPERATURE D'UNE ASSIETTE DE FIBRAGE**
VORRICHTUNG ZUR VERÄNDERUNG DER TEMPERATUR EINER FASERBILDENDEN PLATTE
DEVICE FOR MODIFYING THE TEMPERATURE OF A FIBRE-FORMING PLATE

(30) Priorité: 14.03.2018 FR 1852205
(43) Date de publication de la demande: 20.01.2021
(73) Titulaire: SAINT-GOBAIN ISOVER, 92400 Courbevoie (FR)
(72) Inventeur: OUERGHEMMI, Ezzeddine, 92160 ANTONY (FR); LIEBERKNECHT, Hans Michael, 60280 MARGNY LES COMPIEGNE (FR); DEPUILLE, Jean-Dominique, 60600 AGNETZ (FR)
(74) Mandataire: Saint-Gobain Recherche
(86) Numéro de dépôt international: PCT/FR2019/050548
(87) Numéro de publication internationale: WO 2019/175504

(56) Documents cités:
- FR-A1- 2 993 265
- FR-A1- 3 039 535

## Description

La présente invention est relative au domaine des dispositifs de fibrage.

### ART ANTÉRIEUR

Les fibres de verre dites d'isolation sont couramment produites par centrifugation interne, c'est-à-dire en introduisant un filet de verre fondu dans un centrifugeur encore appelé assiette de fibrage, tournant à grande vitesse et présentant à sa périphérie un très grand nombre d'orifices. Sous l'action de la force centrifuge, le verre est projeté au travers de ces orifices sous forme de filaments. A la force centrifuge vient éventuellement s'ajouter un étirage par un courant gazeux à température et vitesse élevées, émis tangentiellement à la paroi perforée du centrifugeur. Dans ces techniques, le centrifugeur est très fortement sollicité par des contraintes d'origine mécanique, (vitesse de rotation élevée), thermique (verre autour de 1000 °C) et chimique (corrosion par le verre). Or, la qualité des fibres produites dépend très étroitement du bon fonctionnement du centrifugeur, c'est-à-dire de son état d'usure et d'un respect des consignes de vitesse et de température.

FR 3 039 535 et FR 2 993 265 divulguent de telles installations de fibrage.

La vitesse n'a guère de raison d'être modifiée par des perturbations en cours de fabrication, et surtout peut être entièrement maîtrisée indépendamment de tous les autres paramètres si on choisit par exemple d'entraîner l'arbre par un moteur asynchrone piloté de façon adéquate. La consigne donnée pour la vitesse de rotation peut donc être considérée comme strictement respectée.

Par contre la température du centrifugeur est sensible à bon nombre de facteurs qui sont par exemple, l'action de brûleurs internes chauffant l'intérieur du centrifugeur et de moyens complémentaires de chauffage par exemple par induction magnétique visant plus spécialement le bas du centrifugeur, la température du verre, le débit du verre, la température du courant d'étirage gazeux éventuel émis à proximité immédiate du centrifugeur ou de toute façon de l'ambiance plus ou moins chaude régnant autour du centrifugeur, le refroidissement plus ou moins intense dû à la rotation à vitesse plus ou moins grande et le centrifugeur lui-même qui peut notamment être déformé après une certaine durée d'utilisation et de ce fait subir différemment l'action d'échauffement par les brûleurs.

De plus, la qualité des fibres est dépendante du courant gazeux qui permet l'étirage des fibres. En effet, le flux du courant gazeux et la température dudit courant permettent de définir le degré d'étirage des fibres. Or, ce degré d'étirage permet d'atteindre une certaine qualité de fibres.

Actuellement, le réglage du brûleur se fait en réglant les paramètres d'arrivée de comburant/carburant, ce qui entraine une modification du courant gazeux et/ou de la température. Cette modification du courant gazeux et/ou de la température implique donc une modification de la qualité des fibres.

Il existe donc un besoin pour un dispositif de fibrage dans lequel la température de l'assiette peut être ajustée sans modification du courant gazeux.

### RÉSUMÉ DE L'INVENTION

La présente invention se propose donc de résoudre ces inconvénients en fournissant un dispositif permettant le réglage précis de la température de l'assiette de fibrage.

A cet effet, l'invention concerne un dispositif de fibrage pour fabriquer des fibres minérales comprenant une assiette de fibrage percée pour permettre de fabriquer des fibres par centrifugation interne, le dispositif de fibrage comprenant au moins un brûleur annulaire produisant un courant gazeux annulaire pour étirer les fibres et un système d'évacuation pour évacuer des fumées produites par ledit brûleur, caractérisé en ce que ledit dispositif de fibrage comprend en outre un moyen de variation de la température de ladite assiette comprenant un dispositif de circulation d'air agencé pour contrôler le flux d'évacuation des fumées.

Ce dispositif de fibrage permet avantageusement de modifier la température d'une zone de l'assiette de fibrage en vue d'une régulation.

Selon un exemple, l'assiette de fibrage comprend une paroi annulaire percée d'une pluralité d'orifices prolongée latéralement par une partie haute et une partie basse, ledit dispositif de circulation d'air étant agencé pour modifier la température localement en un point de ladite assiette.

Selon un exemple, le dispositif de circulation d'air est agencé pour modifier la température localement à la jonction de la partie haute et de la paroi annulaire.

Selon un exemple, le dispositif de circulation d'air comporte un conduit principal muni d'une première extrémité connectée à un premier conduit secondaire utilisé comme sortie pour l'air et une seconde extrémité connectée à un second conduit secondaire dans lequel l'air entre, ledit moyen de circulation d'air comprenant en outre des moyens de variation du flux agencés pour créer un flux additionnel dans le conduit principal s'additionnant ou s'opposant au flux de l'air qui entre.

Selon un exemple, les moyens de variation du flux comprennent une turbine apte à être commandée et mise en rotation dans les sens horaire ou antihoraire pour fournir un flux dans deux directions distinctes.

Selon un exemple, les moyens de variation du flux comprennent deux turbines, chaque turbine est agencée pour fournir un flux dans une unique direction, lesdites turbines étant placées pour que leurs flux soient opposés.

Selon un exemple, les moyens de variation du flux comprennent deux buses d'injection d'air reliées à un circuit compresseur d'air muni de vannes, lesdites buses d'injection d'air étant agencées au centre du conduit principal, ledit conduit principal comportant un diamètre variable permettant la création d'une dépression.

Selon un exemple, lesdites deux buses d'injection d'air sont placées, chacune, à une extrémité du conduit principal, ledit conduit principal comportant, à chaque extrémité, un diamètre plus important pour permettre la création de la dépression.

Selon un exemple, les moyens de variation du flux comprennent deux buses annulaires d'injection d'air reliées à un circuit compresseur d'air muni de vannes, lesdites buses annulaires d'injection d'air étant pourvues d'une sortie annulaire générant un jet annulaire ou partiellement annulaire et, en ce que lesdites buses annulaires d'injection d'air sont agencées pour que le jet d'air annulaire soit diffusé le long de la paroi intérieure du conduit permettant la création d'une dépression.

Selon un exemple, le second conduit secondaire comprend une paroi intérieure et une paroi extérieure parallèles sont agencées pour présenter un profil en U avec deux branches parallèles reliées entre elles par une branche perpendiculaire, les deux branches parallèles étant ouvertes pour chacune permettre à la fumée de s'y engouffrer, une ouverture étant réalisée dans le prolongement de la branche perpendiculaire pour la connexion dudit second conduit secondaire au conduit principal.

Selon un exemple, le dispositif de fibrage comprend en outre un second moyen de variation de la température de ladite assiette agencé en regard de la partie basse de ladite assiette.

La présence de ce second moyen de variation de la température de ladite assiette permet, en étant associé au premier moyen de variation de la température, d'agir de façon complémentaire et affiner la modification de la température de l'assiette en différents endroits et d'obtenir un profil de température dans lequel plusieurs points sont régulés.

Selon un exemple, la partie haute est un voile reliant l'assiette à l'arbre d'entraînement et la partie basse est une lèvre intérieure repliée en direction de l'arbre d'entraînement.

Selon un exemple, la partie haute est une lèvre intérieure repliée en direction de l'arbre d'entraînement et la partie basse est un voile formant le fond de l'assiette.

L'invention concerne en outre un procédé de modification de la température d'une assiette de fibrage d'un dispositif de fibrage selon l'invention, caractérisé en ce qu'il comprend les étapes suivantes :
- mesurer la température en un point de ladite assiette par un module de mesure ;
- comparer la température mesurée par ledit module de mesure à une valeur de consigne ;
- modifier le flux d'évacuation des fumées en générant un flux additionnel dans le conduit principal s'additionnant ou s'opposant audit flux d'évacuation par ledit dispositif de circulation d'air.

Selon un exemple, ledit dispositif de circulation d'air est agencé pour modifier la température à la jonction de la partie haute et de la paroi annulaire.

Selon un exemple, la modification du flux est opérée manuellement.

Selon un exemple, la modification du flux est opérée automatiquement.

Selon un exemple, l'étape de modification du flux d'évacuation des fumées comprend une séquence d'injection d'un flux additionnel s'additionnant audit flux d'évacuation et/ou une séquence d'injection d'un flux additionnel s'opposant audit flux d'évacuation.

La présente invention concerne en outre un programme d'ordinateur comportant des instructions pour l'exécution des étapes d'un procédé selon l'invention lorsque ledit programme est exécuté par un ordinateur.

La présente invention concerne également un support d'enregistrement lisible par un ordinateur sur lequel est enregistré un programme d'ordinateur comprenant des instructions pour l'exécution des étapes d'un procédé selon l'invention.

### DESCRIPTION DES FIGURES

D'autres particularités et avantages ressortiront clairement de la description qui en est faite ci-après, à titre indicatif et nullement limitatif, en référence aux dessins annexés, dans lesquels:
- la fig. 1 est une représentation schématique d'un système de fibrage selon l'invention,
- la fig. 1a est une représentation schématique d'une variante de centrifugeur du système de fibrage;
- les fig. 2 à 4 sont des représentations des moyens de circulation d'air selon l'invention;
- la fig. 5 est une représentation schématique d'un premier mode d'exécution de moyens de variation du flux utilisé dans les moyens de circulation d'air;
- les fig. 6a et 6b sont des représentations schématiques d'un second mode d'exécution de moyens de variation du flux utilisé dans les moyens de circulation d'air;
- les fig. 7a et 7b sont des représentations schématiques d'un troisième mode d'exécution de moyens de variation du flux utilisé dans les moyens de circulation d'air.
- la fig. 8 est une représentation schématique d'un système de fibrage utilisant des premiers moyens de variation de la température et des seconds moyens de variation de la température.

### DESCRIPTION DETAILLÉE DE L'INVENTION

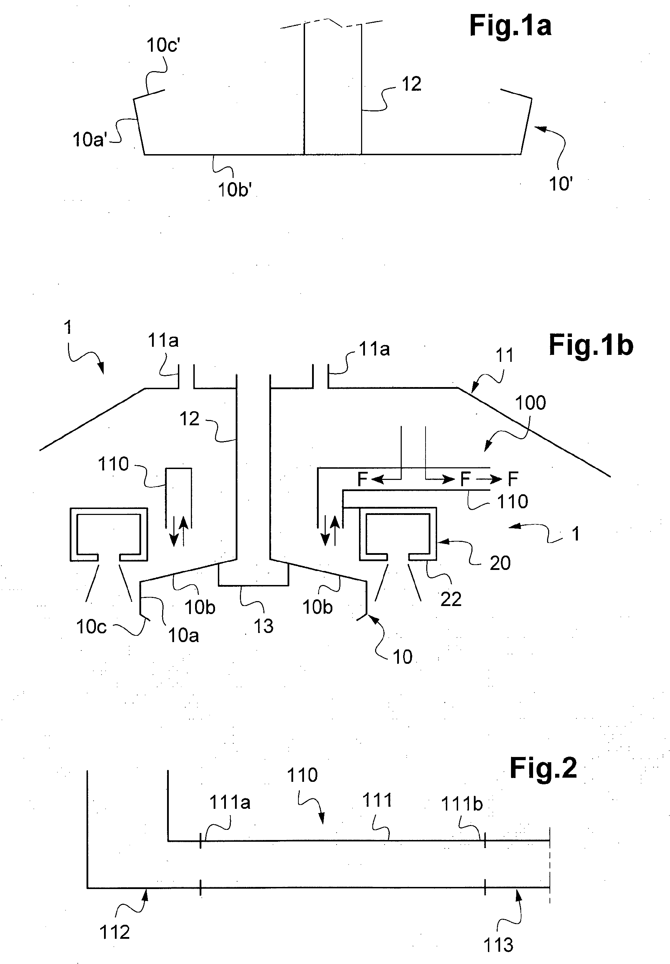

A la figure 1 est représentée une vue en section d'un système de fibrage 1. Un tel système de fibrage comprend un centrifugeur encore appelé assiette de fibrage 10, relié à un arbre d'entraînement 12, tournant à grande vitesse et présentant à sa périphérie un très grand nombre d'orifices. Sous l'action de la force centrifuge, le verre est projeté au travers de ces orifices sous forme de filaments.

L'assiette de fibrage 10 est un dispositif de centrifugation interne de fibres minérales de diamètre micrométrique. Une assiette de fibrage 10 comprend une paroi annulaire 10a percée d'une pluralité d'orifices, prolongée latéralement par une partie supérieure et une partie inférieure. Dans une première configuration, à la figure 1, la partie supérieure est un voile 10b reliant l'assiette à l'arbre d'entraînement et la partie inférieure est une lèvre intérieure 10c repliée en direction de l'arbre d'entraînement 12. Dans une seconde configuration dite d'assiette à fond, représentée à la figure 1a (remplaçant le centrifugeur au-delà de la ligne en trait interrompu) la partie supérieure est une lèvre intérieure 10c' repliée en direction de l'arbre d'entraînement et la partie inférieure est un voile 10b' formant le fond de l'assiette 10'.

Dans un exemple de réalisation non limitatif de dispositif selon la figure 1, le centrifugeur est fixé sur un arbre 12. L'arbre 12 et le centrifugeur 10 sont animés d'un mouvement de rotation rapide au moyen d'un moteur non représenté. L'arbre 12 est creux et le verre à l'état fondu s'écoule depuis les moyens d'alimentation non représentés dans l'arbre jusqu'à un panier distributeur 13 dans lequel se répand le verre fondu. Le panier est également entraîné en rotation de sorte que le verre fondu est projeté sur sa paroi périphérique qui est percée d'orifices et, de là, sous forme de filets volumineux sur la paroi périphérique du centrifugeur, qui vont former sur cette paroi une réserve permanente de verre fondu venant alimenter les orifices percés dans ladite paroi. Cette paroi est inclinée d'environ 1 à 10° par rapport à la verticale.

Dans un exemple de réalisation non limitatif de dispositif selon la figure 1a, le verre fondu est alimenté par le côté de l'arbre d'entraînement sur le fond de l'assiette de fibrage constitué par le voile 10b'.

Cette assiette de fibrage est chauffée par un module de chauffage 20. Le module de chauffage 20 comprend un brûleur annulaire 22 permettant l'atténuation des fibres. Ce brûleur annulaire 22 à combustion interne comporte une chambre de combustion alimentée en combustible et en comburant, la chambre comportant une enveloppe pourvue d'une première extrémité fermée et d'une seconde extrémité opposée d'échappement ouverte par laquelle s'échappent les gaz de combustion, l'enveloppe présentant au moins deux parois opposées qui relient les deux extrémités. Le brûleur annulaire 22 comporte dans la chambre et au niveau de la première extrémité fermée, au moins un dispositif de combustion alimenté en comburant et en combustible.

Les filaments de verre projetés hors des orifices de l'assiette sous l'effet de la force centrifuge sont alors soumis à l'action d'un courant annulaire gazeux issu du brûleur annulaire 22 à température et vitesse élevées longeant la paroi du centrifugeur qui les amincit et les étire en fibres.

Un tel dispositif de fibrage comprend également une hotte 11 pour récupérer les fumées et les évacuer.

Selon l'invention, le dispositif de fibrage 1 comprend en outre un moyen de variation de la température de l'assiette 100. Ce moyen de variation de la température 100 est agencé pour modifier la température d'un point de l'assiette. Ce point est de préférence le point de l'assiette appelé haut de bande ou arrondi. En effet, ce point est situé dans la zone de jonction entre la partie supérieure et la paroi annulaire 10a percée par laquelle le verre fondu passe. Le moyen de variation de température de l'assiette agit avantageusement dans un espace compris entre ladite assiette 10 et le brûleur 22 sans interférer avec le courant gazeux d'étirage. Le moyen de variation de la température 100 est donc capable de modifier la température du point de haut de bande de l'assiette de fibrage 10, et par incidence le profil de température le long de la bande, de façon indépendante des moyens d'étirage

Le moyen de variation de la température 100 est ici un moyen de circulation d'air 110 utilisé pour contrôler le flux F d'évacuation des fumées issues du brûleur annulaire 22. Effectivement, il a été constaté que le débit de ses fumées influence sensiblement la température d'arrondi d'assiette et l'équilibre thermique de l'assiette. Par conséquent, le moyen de circulation d'air 110 selon la présente invention est un moyen permettant de diminuer ou d'augmenter l'évacuation de la fumée vers la hotte 11, afin de modifier la température de l'arrondi (haut de bande) d'une assiette de fibrage. Ce moyen de circulation d'air 110 se trouve, par exemple, agencé de façon à déboucher entre l'ensemble assiette de fibrage-brûleur et le système d'évacuation des fumées comprenant par exemple une hotte 11 munie d'un conduit d'évacuation 11a.

Dans un mode de réalisation, le moyen de circulation d'air 110 se présente de la façon représentée en section à la figure 2. Le moyen de circulation d'air 110 comprend un conduit principal 111 ayant deux extrémités. Une première extrémité 111a est appelée extrémité d'évacuation et est connectée à un premier conduit secondaire 112 aussi appelé conduit de cheminée. Ce premier conduit secondaire 112 est utilisé pour évacuer une partie des fumées issues du brûleur vers le système d'évacuation des fumées. Une seconde extrémité 111b est appelée extrémité de collecteur et est connectée à un second conduit secondaire 113 aussi appelé conduit collecteur. Ce second conduit secondaire 113 est utilisé pour collecter les fumées du brûleur annulaire. Pour cela, ce second conduit secondaire 113 présente une forme adaptée à collecter les fumées tout autour de l'assiette de fibrage et il peut donc comporter un collecteur annulaire.

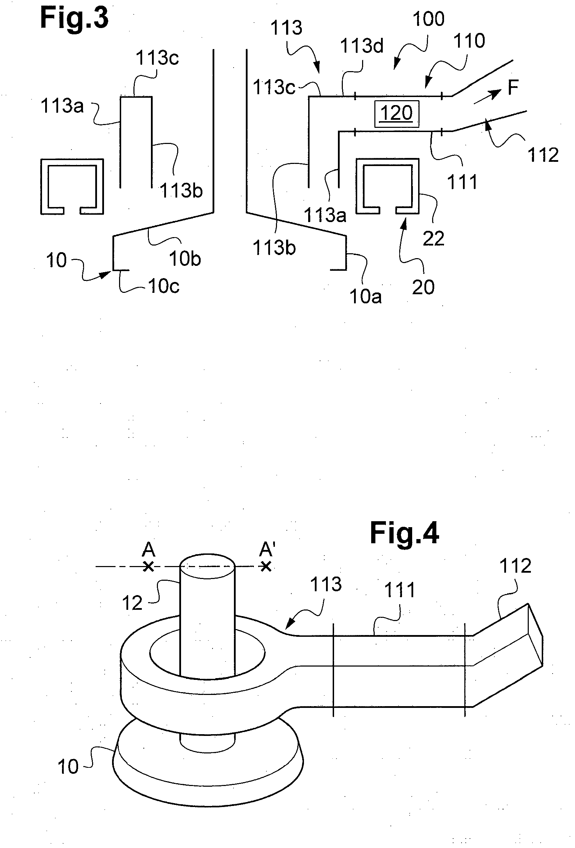

Dans un exemple non limitatif visible aux figures 3 et 4, le second conduit secondaire 113 présente une forme annulaire c'est-à-dire qu'il comprend deux parois tubulaires concentriques, une paroi intérieure 113b et une paroi extérieure 113a, reliées par un flanc 113c pour former un canal de profil en U c'est-à-dire avec deux branches parallèles 113a, 113b reliées entre elles par une branche perpendiculaire 113c, les deux branches parallèles 113a, 113b formant à l'opposé du flanc une ouverture pour permettre à la fumée de s'y engouffrer comme visible sur la figure 3 qui est une vue en section selon l'axe A-A' du dispositif de fibrage visible sur la figure 4. Pour la connexion de ce second conduit secondaire 113 au conduit principal 111, une ouverture peut être réalisée dans la paroi tubulaire extérieure 113a dans le prolongement de la branche perpendiculaire, cette ouverture permettant à un conduit de connexion 113d de s'étendre pour la connexion avec le conduit principal 111. Ce conduit 113d pourra avoir une section constante ou non. Dans le cas d'une section non constante (non représenté), l'ouverture au niveau du second conduit secondaire 113 aura une section plus grande que celle au niveau du conduit principal 111. Cet exemple limitatif a l'avantage de pouvoir aspirer la fumée tout autour de l'arbre 12 soutenant le centrifugeur 10.

Bien entendu, le second conduit secondaire 113 pourra avoir toutes les formes possibles permettant d'obtenir un résultat similaire notamment une forme tronconique formée par la paroi intérieure 113b et la paroi extérieure 113a.

Pour permettre de modifier de flux d'évacuation des fumées, le moyen de circulation d'air 110 comprend en outre des moyens de variation du flux 120 commandés par une unité de commande (non représentée). Ces moyens de variation du flux de fumée 120 sont utilisés pour apporter un flux additionnel f dans les conduits afin de s'additionner ou de s'opposer au flux d'évacuation F. Dans le cas où les moyens de variation du flux de fumée 120 additionnent un flux d'air f au flux d'évacuation F, ils permettent de créer une aspiration permettant d'augmenter le débit d'évacuation de la fumée. Dans le cas où les moyens de variation du flux de fumée 120 créent un flux d'air f dirigé dans le sens opposé au flux d'évacuation F, il s'agit ici de créer un flux qui agit comme une contre-pression. Ce flux de contre-pression est donc créé dans une direction opposée au flux d'évacuation F. De ce fait, ce flux de contre pression diminue le débit d'évacuation de la fumée.

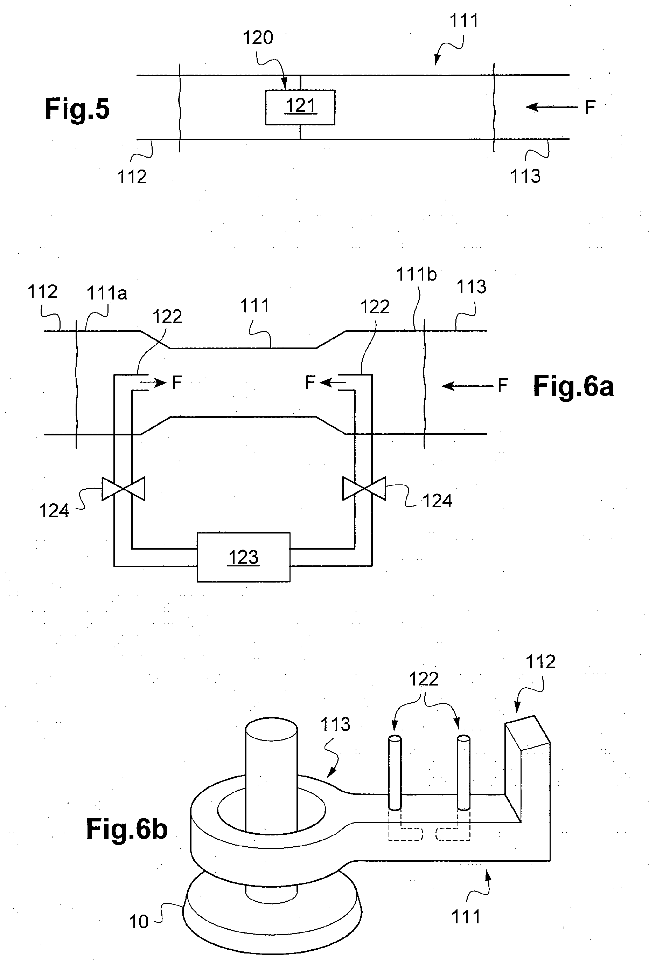

Dans un premier mode d'exécution visible à la figure 5, les moyens de variation du flux comprennent au moins une turbine 121. Cette turbine est agencée dans le conduit principal 111 pour une intégration plus facile.

Dans le cas d'une unique turbine 121, celle-ci sera agencée pour être bidirectionnelle c'est-à-dire permettant une rotation dans le sens horaire ou antihoraire. Par conséquent, selon le sens de rotation de la turbine 121, il sera possible d'améliorer l'évacuation en aspirant plus efficacement la fumée ou de ralentir cette évacuation en générant un flux de contre-pression.

Dans le cas, non représenté, de plusieurs turbines, deux turbines 121 seront agencées. Chaque turbine aura un sens de rotation spécifique permettant d'aspirer ou de souffler. Ces turbines pourront avoir une vitesse de rotation fixe ou réglable afin de modifier le flux.

Dans un second mode d'exécution visible aux figures 6a et 6b, les moyens de variation du flux comprennent au moins deux buses d'injection d'air 122. Ces buses d'injection d'air 122 sont reliées à un circuit compresseur d'air 123 par des vannes 124. Ces buses d'injection d'air 122 sont agencées afin d'injecter un flux d'air additionnel f ayant une puissance, et/ou vélocité supérieure au flux normal d'évacuation des fumées.

Ces buses d'injection d'air 122 sont agencées au niveau du conduit principal 111. Le conduit principal 111 peut avoir un diamètre uniforme ou non.

Les buses d'injection d'air 122 sont ainsi placées au niveau des extrémités 111a, 111b du conduit principal. Ces buses d'injection d'air 122 sont placées pour avoir une direction d'injection opposée, la buse d'injection d'air 122 d'une première extrémité du conduit principal injectant de l'air dans une direction contraire à la direction de l'air injectée par la buse d'injection d'air 122 de la seconde extrémité.

Cet agencement des buses d'injection d'air 122 au niveau de ces extrémités 111a, 111b est réalisé de sorte que ces buses 122 soient orientées vers la partie du conduit principal 111, leur fonctionnement étant le suivant.

Pour la buse d'injection d'air 122 orientée vers l'extrémité 111a, c'est à dire vers l'évacuation, le fonctionnement consiste en ce que l'injection d'air entraine une accélération des fumées dans la zone adjacente. Cette accélération entraine ainsi une dépression qui aspire les fumées vers l'extérieur et les accélère.

Pour la buse d'injection d'air 122 orientée vers l'extrémité 111b c'est à dire vers le collecteur, le fonctionnement consiste en ce que l'injection d'air soit opposée au flux d'évacuation F des fumées. Ce faisant, le flux d'évacuation F des fumées est ralenti, diminué.

Ces buses d'injection d'air 122 peuvent être placées au centre axial du conduit principal 111 ou être excentrée.

Pour le réglage de la température, on pourra jouer sur deux facteurs qui sont la température et le débit. En effet, le débit est utilisé pour créer le phénomène provoquant l'aspiration. Ainsi, une variation du débit entraine une variation de l'effet causé par ce flux additionnel f. Ainsi, dans le cas d'une aspiration de la fumée, si le débit du flux additionnel f augmente alors la fumée sera aspirée plus intensément et donc la température augmentera à l'arrondi de l'assiette. Au contraire, en cas d'utilisation de l'aspiration pour le soufflage alors l'augmentation du débit entrainera une baisse de la température.

Dans le cas du réglage par modification de la température de l'air injecté, cela n'influe que lors du mode soufflage. En effet, ce mode soufflage est utilisé pour abaisser la température de l'assiette de fibrage. Ainsi, à débit constant, une baisse de la température de l'air injecté entraine une baisse de la température de l'assiette de fibrage.

Pour modifier la température de l'air injecté, un système de refroidissement classique avec une circulation d'eau peut être utilisé.

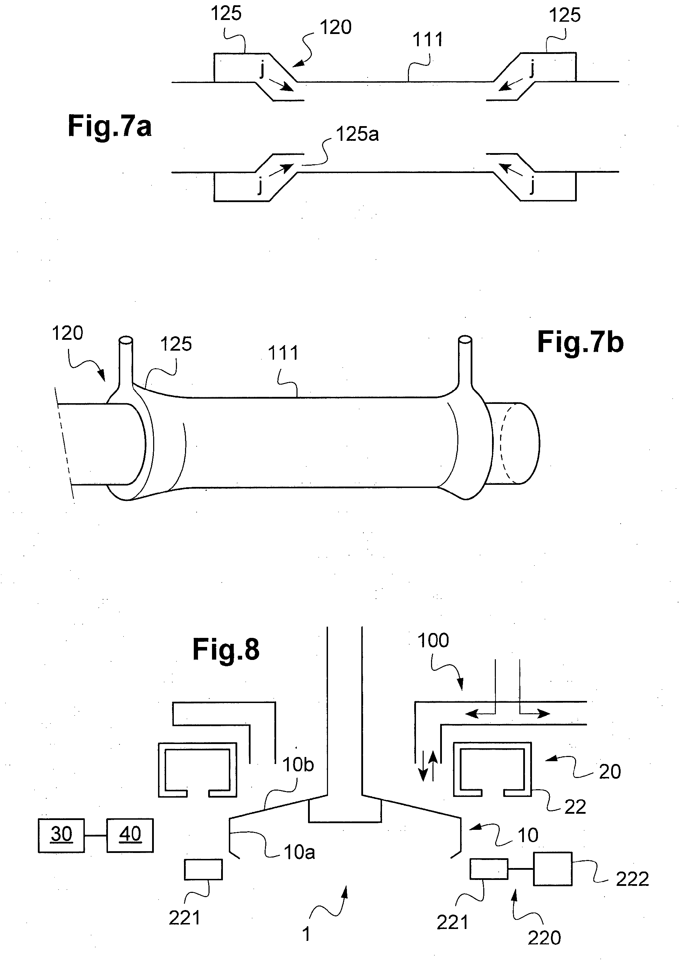

Dans un troisième mode d'exécution visible aux figures 7a et 7b, les moyens de variation du flux 120 comprennent au moins deux amplificateurs d'air 125. Chaque amplificateur d'air consiste en une buse annulaire d'injection d'air 125a agencée dans le conduit. Cette buse annulaire d'injection d'air 125a présente une sortie de forme annulaire et injecte un jet d'air j de forme annulaire dans le conduit. Le jet d'air j annulaire pourra être fragmenté ou non. Un tel jet d'air j annulaire est un jet d'air qui est localisé sur la paroi intérieure du conduit et qui se diffuse le long de cette paroi intérieure. Cette diffusion le long de la paroi intérieure est rendu possible par l'effet Coanda, effet par lequel un jet de fluide est attaché à une surface convexe sur lequel il s'écoule, ici la paroi intérieure du conduit. Le jet d'air annulaire entraine l'apparition d'une différence entre le flux annulaire et le flux dans la partie centrale du conduit créant ainsi une dépression. Cette dépression engendre un phénomène d'aspiration.

Les buses annulaires 125a sont agencées dans le conduit de manière opposées c'est-à-dire que les deux buses délivrent des flux allant dans des directions opposée. Ainsi, suivant la buse annulaire d'injection d'air activée, la dépression engendre un phénomène d'aspiration qui permet d'augmenter l'évacuation de la fumée par aspiration de celle-ci ou de diminuer l'évacuation de la fumée en induisant une aspiration allant à l'encontre de l'évacuation.

Pour les différents modes d'exécution, le réglage pourra être réalisé manuellement ou de façon automatique en utilisant une régulation.

Afin d'avoir une régulation la plus lisse possible, il sera avantageusement prévu que l'action sur les différentes vannes du dispositif de circulation d'air soit opérée afin que les vannes ne soient pas commandées simultanément. En effet, une régulation, dans laquelle l'ouverture des vannes, pour le soufflage d'air c'est-à-dire l'injection d'un flux additionnel f qui s'oppose au flux d'évacuation F et pour l'aspiration d'air c'est-à-dire l'injection d'un flux additionnel f qui s'additionne au flux d'évacuation F, serait modifiée simultanément, serait instable avec une température qui serait fluctuante et aurait un impact sur la qualité des fibres.

Au contraire, une régulation qualifiée de séquentielle permettra une plus faible fluctuation de la température. Concrètement, une telle régulation signifie que la vanne en cours d'utilisation est fermée avant que la vanne de l'autre circuit ne soit ouverte. La régulation comprend donc plusieurs séquences. Dans un exemple dans lequel le dispositif de circulation d'air est mode aspiration c'est-à-dire que la température est augmentée, l'abaissement de la température se fait en fermant cette vanne d'aspiration. Si la fermeture de cette vanne est suffisante alors la vanne du circuit de soufflage n'est pas ouverte. Au contraire, si la température n'a pas baissé suffisamment avec la fermeture de la vanne d'aspiration, alors la vanne de soufflage est progressivement ouverte. Ainsi, l'étape de modification du flux d'évacuation des fumées F comprend une séquence d'injection d'un flux additionnel f s'additionnant audit flux d'évacuation et/ou une séquence d'injection d'un flux additionnel s'opposant audit flux d'évacuation.

Dans une variante visible sur la vue en section de la figure 8, un autre moyen de variation de la température est agencé. Ce second moyen de variation de la température de l'assiette 220 comprend une bobine d'induction 221 connectée à un générateur de fréquence 222 qui sert de premier moyen de variation de la température. Ce générateur de fréquence 222 génère un signal SI envoyé à la bobine d'induction 221. C'est ce signal qui permet de moduler la puissance d'induction de la bobine d'induction 222 et qui permet de faire varier la température de chauffage. Pour rappel, la bobine d'induction 221, lorsqu'elle est parcourue par le signal SI qui est un courant électrique modulé en fréquence, génère un champ magnétique qui, à son tour, induit des courants électriques dans le métal à proximité. Les pertes par courants de Foucault et par hystérésis produites dans ce métal dissipent l'énergie thermique (chaleur) par effet Joule. Cette bobine d'induction 221 est agencée dans la partie basse de l'assiette de fibrage, et plus particulièrement sous l'assiette de fibrage. Cette bobine d'induction est agencée pour être en regard du filet de fibres crée par ladite assiette afin de pouvoir localement chauffé cette zone basse de l'assiette.

Ainsi, il est possible d'avoir un profil d'assiette qui est régulé précisément puisque le premier moyen de variation utilisant le dispositif de circulation d'air régule le point haut aussi appelé arrondi de l'assiette alors que le second moyen de variation de la température régule le point bas de l'assiette.

Cette régulation du profil utilise des mesures de températures de l'assiette. Pour obtenir ce relevé, une première étape consiste à utiliser un capteur de température comme par exemple un pyromètre associé à un miroir oscillant. Le miroir est mis en oscillation avec une certaine fréquence pour balayer l'assiette de fibrage 10 et obtenir une courbe de la température en fonction de la position angulaire du miroir. Il peut être prévu que le pyromètre soit monté pivotant et donc ne soit pas associé à un miroir.

Cette courbe est astucieusement traitée par l'unité de calcul afin d'extraire au moins un point spécifique. Une méthode de détermination de points spécifiques est alors utilisée.

La méthode de détermination de points spécifiques selon l'invention comprend une première sous-étape consistant à se munir des mesures de températures de l'assiette de fibrage au moyen d'un module de mesure de la température 40 pour fournir une courbe représentative de la température en fonction de la position angulaire du dispositif de mesure de la température à une unité de calcul 30. Ces mesures peuvent être récupérées en direct ou être récupérées depuis une unité mémoire dans laquelle elles sont stockées.

Une seconde sous-étape de la méthode de détermination consiste à procéder au traitement des données par l'unité de calcul 30, pour calculer et obtenir la dérivée seconde de la courbe de la température en fonction de la position angulaire du miroir 43. Cette dérivée seconde est utilisée pour rechercher des points spécifiques/caractéristiques. En effet, la dérivée seconde permet d'obtenir la variation de la pente.

Dans une troisième sous-étape de la méthode de détermination, la dérivée seconde de la courbe de la température en fonction de la position angulaire du miroir 43 est analysée, par l'unité de calcul 30, pour rechercher les points spécifiques/caractéristiques. Ces points spécifiques/caractéristiques sont les points pour lesquels la dérivée seconde est égale à zéro.

Il est ensuite possible de définir à quoi correspond le point caractéristique. On comprendra que les points représentatifs du bas de bande de l'assiette et de l'arrondi de l'assiette sont de part et d'autre dudit point chaud, aux extrémités de la courbe.

Dans le cas présente invention, deux points caractéristiques/particuliers sont recherchés. Ces points correspondent au bas de bande de l'assiette et à l'arrondi de l'assiette.

De plus, une quatrième sous-étape facultative de la méthode de détermination peut être opérée. Cette quatrième sous-étape facultative consiste à trouver le point chaud de l'assiette de fibrage. Pour cela, l'unité de calcul 30 cherche le maximum absolu de la courbe qui correspond au dit point chaud. Ce point chaud est le point spécifique/caractéristique central agencé entre les points correspondants à la température de bas de bande de l'assiette et à l'arrondi de l'assiette.

Cette utilisation de la dérivée seconde permet avantageusement d'être indépendant des fluctuations des dimensions de l'assiette. En effet, l'assiette peut voir ses dimensions varier avec l'usure et/ou les vibrations. Or, malgré cette variation des dimensions de l'assiette, sa forme générale reste identique. De ce fait, les points spécifiques/caractéristiques perdurent. Cela permet de toujours être en mesure de bien identifier les points spécifiques. Ainsi, la régulation qui en découle se fait toujours sur des points spécifiques précis et réellement représentatifs de l'assiette.

Dans une troisième étape, les valeurs de températures des points particuliers sont utilisées pour une régulation de l'assiette de fibrage 10.

Bien entendu, la présente invention ne se limite pas à l'exemple illustré mais est susceptible de diverses variantes et modifications qui apparaîtront à l'homme de l'art.

## Revendications

1. Dispositif de fibrage (1) pour fabriquer des fibres minérales comprenant une assiette de fibrage (10, 10') percée pour permettre de fabriquer des fibres par centrifugation interne, le dispositif de fibrage comprenant au moins un brûleur annulaire (22) produisant un courant gazeux annulaire pour étirer les fibres et un système d'évacuation (11) pour évacuer des fumées créées par ledit brûleur, **caractérisé en ce que** ledit dispositif de fibrage comprend en outre un moyen de variation de la température (100) de ladite assiette comprenant un dispositif de circulation d'air (110) agencé pour contrôler le flux (F) d'évacuation des fumées.

2. Dispositif de fibrage selon la revendication 1, dans lequel l'assiette de fibrage (10) comprend une paroi annulaire (10a, 10a') percée d'une pluralité d'orifices prolongée latéralement par une partie haute (10b, 10c') et une partie basse (10c, 10b'), ledit dispositif de circulation d'air (110) étant agencé pour modifier la température localement en un point de ladite assiette.

3. Dispositif de fibrage (1) selon la revendication 2, dans lequel le dispositif de circulation d'air comporte un conduit principal (111) muni d'une première extrémité (111a) connectée à un premier conduit secondaire (112) utilisé comme sortie pour l'air et une seconde extrémité (111b) connectée à un second conduit secondaire (113) dans lequel l'air entre, ledit moyen de circulation d'air comprenant en outre des moyens de variation du flux (120) agencés pour générer un flux additionnel (f) dans le conduit principal s'additionnant ou s'opposant au flux d'évacuation (F).

4. Dispositif de fibrage (1) selon la revendication 3, dans lequel les moyens de variation du flux comprennent une turbine (121) apte à être commandée et mise en rotation dans les sens horaire ou antihoraire pour fournir ledit flux additionnel (f) dans deux directions distinctes.

5. Dispositif de fibrage (1) selon la revendication 3, lequel les moyens de variation du flux comprennent deux turbines (121), chaque turbine est agencée pour fournir ledit flux additionnel (f) dans une unique direction, lesdites turbines étant placées pour que leurs flux additionnels (f) soient opposés.

6. Dispositif de fibrage selon la revendication 3, dans lequel les moyens de variation du flux comprennent deux buses d'injection d'air (122) reliées à un circuit compresseur d'air (123) muni de vannes (124), lesdites buses d'injection d'air étant agencées au centre du conduit principal, ledit conduit principal comportant un diamètre variable permettant la création d'une dépression.

7. Dispositif de fibrage selon la revendication 6, dans lequel lesdites deux buses d'injection d'air (122) sont placées, chacune, à une extrémité du conduit principal (111), ledit conduit principal comportant, à chaque extrémité, un diamètre plus important pour permettre la création de la dépression.

8. Dispositif de fibrage selon la revendication 3, dans lequel les moyens de variation du flux comprennent deux buses annulaires d'injection d'air (125a) reliées à un circuit compresseur d'air (123) muni de vannes, lesdites buses annulaires d'injection d'air étant pourvues d'une sortie annulaire générant un jet d'air (j) annulaire et en ce que lesdites buses annulaires d'injection d'air sont agencées pour que le jet d'air annulaire soit diffusé le long de la paroi intérieure du conduit permettant la création d'une dépression.

9. Dispositif de fibrage selon l'une des revendications 3 à 8, dans lequel le second conduit secondaire (113) comprend une paroi intérieure (113b) et une paroi extérieure (113a) parallèles sont agencées pour présenter un profil en U avec deux branches parallèles reliées entre elles par une branche perpendiculaire (113c), les deux branches parallèles étant ouvertes pour chacune permettre à la fumée de s'y engouffrer, une ouverture étant réalisée dans le prolongement de la branche perpendiculaire pour la connexion dudit second conduit secondaire au conduit principal.

10. Dispositif de fibrage selon l'une des revendications 2 à 9, dans lequel ledit dispositif de circulation d'air (110) est agencé pour modifier la température à la jonction de la partie haute et de la paroi annulaire.

11. Dispositif de fibrage selon l'une des revendications précédentes, dans lequel il comprend en outre un second moyen de variation de la température (220) de ladite assiette agencé en regard de la partie basse de ladite assiette.

12. Dispositif de fibrage selon l'une des revendications 2 à 11, dans lequel la partie haute est un voile et la partie basse une lèvre intérieure, ou bien dans lequel la partie haute est une lèvre intérieure et la partie basse est un voile.

13. Procédé de modification de la température d'une assiette de fibrage d'un dispositif de fibrage selon l'une des revendications 2 à 12, **caractérisé en ce qu'**il comprend les étapes suivantes :
- mesurer la température en un point de ladite assiette par un module de mesure (40) ;
- comparer la température mesurée par ledit module de mesure (40)à une valeur de consigne ;
- modifier le flux (F) d'évacuation des fumées en générant un flux additionnel (f) dans le conduit principal s'additionnant ou s'opposant audit flux (F) d'évacuation par ledit dispositif de circulation d'air (110)

14. Procédé de modification de la température d'une assiette de fibrage selon la revendication précédente, dans lequel ledit dispositif de circulation d'air (110) est agencé pour modifier la température à la jonction de la partie haute et de la paroi annulaire.

15. Procédé de modification de la température d'une assiette de fibrage d'un dispositif de fibrage selon l'une des revendications 13 ou 14, **caractérisé en ce que** la modification du flux est opérée manuellement ou automatiquement.

16. Procédé de modification de la température d'une assiette de fibrage d'un dispositif de fibrage selon l'une des revendications 13 à 15, **caractérisé en ce que** l'étape de modification du flux d'évacuation (F) des fumées comprend une séquence d'injection d'un flux additionnel (f) s'additionnant audit flux d'évacuation et/ou une séquence d'injection d'un flux additionnel (f) s'opposant audit flux d'évacuation (F).

17. Programme d'ordinateur comportant des instructions pour l'exécution des étapes d'un procédé selon l'une quelconque des revendications 13 à 16 lorsque ledit programme est exécuté par un ordinateur.

18. Support d'enregistrement lisible par un ordinateur sur lequel est enregistré un programme d'ordinateur comprenant des instructions pour l'exécution des étapes d'un procédé selon l'une quelconque des revendications 13 à 16.

## Patentansprüche

1. Zerfaserungsvorrichtung (1) zum Herstellen von Mineralfasern, umfassend eine Zerfaserungsscheibe (10, 10'), die zum Ermöglichen des Herstellens von Fasern durch innere Zentrifugation durchbohrt ist, die Zerfaserungsvorrichtung umfassend mindestens einen ringförmigen Brenner (22), der einen ringförmigen Gasstrom zum Ziehen der Fasern produziert, und ein Abführsystem (11) zum Abführen von Rauch, der durch den Brenner erzeugt wird,
**dadurch gekennzeichnet, dass** die Zerfaserungsvorrichtung ferner ein Mittel zum Variieren der Temperatur (100) der Scheibe umfasst, umfassend eine Luftzirkulationsvorrichtung (110), die zum Steuern der Abführströmung (F) des Rauchs angeordnet ist.

2. Zerfaserungsvorrichtung nach Anspruch 1, wobei die Zerfaserungsscheibe (10) eine ringförmige Wand (10a, 10a') umfasst, die von einer Vielzahl von Öffnungen durchbohrt ist, die durch einen oberen Teil (10b, 10c') und einen unteren Teil (10c, 10b') seitlich verlängert ist, wobei die Luftzirkulationsvorrichtung (110) zum Verändern der Temperatur lokal an einem Punkt der Scheibe angeordnet ist.

3. Zerfaserungsvorrichtung (1) nach Anspruch 2, wobei die Luftzirkulationsvorrichtung eine Hauptleitung (111) aufweist, die mit einem ersten Ende (111a), das mit einer ersten Nebenleitung (112) verbunden ist, die als Auslass für die Luft verwendet wird, und einem zweiten Ende (111b) versehen ist, das mit einer zweiten Nebenleitung (113) verbunden ist, in die die Luft eintritt, umfasst, das Luftzirkulationsmittel umfassend ferner Strömungsvariationsmittel (120), die zum Generieren einer zusätzlichen Strömung (f) in der Hauptleitung angeordnet sind, die zu der Abführströmung (F) hinzukommt oder sich ihr widersetzt.

4. Zerfaserungsvorrichtung (1) nach Anspruch 3, wobei die Mittel zum Variieren der Strömung eine Turbine (121) umfassen, die geeignet ist, um zum Bereitstellen der zusätzlichen Strömung (f) in zwei verschiedene Richtungen gesteuert und in dem Uhrzeigersinn oder gegen den Uhrzeigersinn in Drehung versetzt zu werden.

5. Zerfaserungsvorrichtung (1) nach Anspruch 3, wobei die Mittel zum Variieren der Strömung zwei Turbinen (121) umfassen, wobei jede Turbine zum Bereitstellen der zusätzlichen Strömung (f) in eine einzige Richtung angeordnet ist, wobei die Turbinen so platziert sind, dass ihre zusätzlichen Strömungen (f) entgegengesetzt sind.

6. Zerfaserungsvorrichtung nach Anspruch 3, wobei die Mittel zum Variieren der Strömung zwei Lufteinblasdüsen (122) umfassen, die mit einem Luftverdichterkreis (123) verbunden sind, der mit Ventilen (124) versehen ist, wobei die Lufteinblasdüsen in der Mitte der Hauptleitung angeordnet sind, wobei die Hauptleitung einen variablen Durchmesser aufweist, der die Erzeugung eines Unterdrucks ermöglicht.

7. Zerfaserungsvorrichtung nach Anspruch 6, wobei die zwei Lufteinblasdüsen (122) jeweils an einem Ende der Hauptleitung (111) platziert sind, wobei die Hauptleitung an jedem Ende einen größeren Durchmesser zum Ermöglichen der Erzeugung des Unterdrucks aufweist.

8. Zerfaserungsvorrichtung nach Anspruch 3, wobei die Mittel zum Variieren der Strömung zwei ringförmige Lufteinblasdüsen (125a) umfassen, die mit einem Luftverdichterkreis (123) verbunden sind, der mit Ventilen versehen ist, wobei die ringförmigen Lufteinblasdüsen mit einem ringförmigen Auslass ausgestattet sind, der einen ringförmigen Luftstrahl (j) generiert, und dass die ringförmigen Lufteinblasdüsen so angeordnet sind, dass der ringförmige Luftstrahl entlang der inneren Wand der Leitung verbreitet wird, wobei die Erzeugung eines Unterdrucks ermöglicht wird.

9. Zerfaserungsvorrichtung nach einem der Ansprüche 3 bis 8, wobei die zweite Nebenleitung (113) eine innere Wand (113b) und eine äußere Wand (113a) umfasst, die parallel sind, die zum Vorweisen eines U-förmigen Profils mit zwei parallelen Schenkeln angeordnet sind, die durch einen senkrechten Schenkel (113c) miteinander verbunden sind, wobei die zwei parallelen Schenkel offen sind, damit jeder ermöglicht, dass sich der Rauch dort hineindrängt, wobei in der Verlängerung des senkrechten Schenkels eine Öffnung für die Verbindung der zweiten Nebenleitung mit der Hauptleitung ausgebildet ist.

10. Zerfaserungsvorrichtung nach einem der Ansprüche 2 bis 9, wobei die Luftzirkulationsvorrichtung (110) zum Verändern der Temperatur an der Verbindungsstelle zwischen dem oberen Teil und der ringförmigen Wand angeordnet ist.

11. Zerfaserungsvorrichtung nach einem der vorstehenden Ansprüche, wobei sie außerdem ein zweites Mittel zum Variieren der Temperatur (220) der Scheibe umfasst, das gegenüber dem unteren Teil der Scheibe angeordnet ist.

12. Faservorrichtung nach einem der Ansprüche 2 bis 11, wobei der obere Teil eine Abdeckung und der untere Teil eine innere Lippe ist, oder wobei der obere Teil eine innere Lippe und der untere Teil eine Abdeckung ist.

13. Verfahren zum Verändern der Temperatur einer Zerfaserungsscheibe einer Zerfaserungsvorrichtung nach einem der Ansprüche 2 bis 12,
**dadurch gekennzeichnet, dass** es die folgenden Schritte umfasst:
- Messen der Temperatur an einem Punkt der Scheibe durch ein Messmodul (40);
- Vergleichen der Temperatur, die durch das Messmodul (40) gemessen wird, mit einem Sollwert;
- Verändern der Rauchabführströmung (F) durch Generieren eines zusätzlichen Stroms (f) in der Hauptleitung, der zu der Abführströmung (F) hinzukommt oder sich dieser widersetzt, durch die Luftzirkulationsvorrichtung (110)

14. Verfahren zum Verändern der Temperatur einer Zerfaserungsscheibe nach dem vorstehenden Anspruch, wobei die Luftzirkulationsvorrichtung (110) zum Verändern der Temperatur an der Verbindungsstelle zwischen dem oberen Teil und der ringförmigen Wand angeordnet ist.

15. Verfahren zum Verändern der Temperatur einer Zerfaserungsscheibe einer Zerfaserungsvorrichtung nach einem der Ansprüche 13 oder 14,
**dadurch gekennzeichnet, dass** die Veränderung der Strömung manuell oder automatisch vorgenommen wird.

16. Verfahren zum Verändern der Temperatur einer Zerfaserungsscheibe einer Zerfaserungsvorrichtung nach einem der Ansprüche 13 bis 15,
**dadurch gekennzeichnet, dass** der Schritt des Veränderns der Abführströmung (F) des Rauchs eine Sequenz zum Einspritzen einer zusätzlichen Strömung (f), die zu der Abführströmung hinzukommt, und/oder eine Sequenz zum Einspritzen einer zusätzlichen Strömung (f), die sich der Abführströmung (F) widersetzt, umfasst.

17. Computerprogramm, das Anweisungen für die Ausführung der Schritte eines Verfahrens nach einem der Ansprüche 13 bis 16 aufweist, wenn das Programm durch einen Computer ausgeführt wird.

18. Computerlesbares Speichermedium, auf dem ein Computerprogramm gespeichert ist, umfassend Anweisungen für die Ausführung der Schritte eines Verfahrens nach einem der Ansprüche 13 bis 16.

## Claims

1. Fibre forming device (1) for fabricating mineral fibres, comprising a fibre forming spinner wheel (10, 10') pierced to enable fabrication of fibres by internal centrifuging, the fibre forming device comprising at least one annular burner (22) producing an annular gas flow to stretch the fibres and an evacuation system (11) for evacuating smoke created by said burner, **characterized in that** the fibre forming device further comprises a means (100) for variation of the temperature of said spinner wheel comprising an air circulation device (110) adapted to control the smoke evacuation flow (F).

2. Fibre forming device according to Claim 1, wherein the fibre forming spinner wheel (10) comprises an annular wall (10a, 10a') pierced by a plurality of orifices extended laterally by a top part (10b, 10c') and a bottom part (10c, 10b'), said air circulation device (110) being adapted to modify locally the temperature at a point of said spinner wheel.

3. Fibre forming device (1) according to Claim 2, wherein the air circulation device includes a main pipe (111) having a first end (111a) connected to a first secondary pipe (112) used as an air outlet and a second end (111b) connected to a second secondary pipe (113) in which the air enters, said air circulation means further comprising means for variation of the flow (120) adapted to generate an additional flow (f) in the main pipe adding to or opposing the evacuation flow (F).

4. Fibre forming device (1) according to Claim 3, wherein the means for variation of the flow comprise a turbine (121) adapted to be controlled and rotated in the clockwise or anticlockwise direction to supply said additional flow (f) in two distinct directions.

5. Fibre forming device (1) according to Claim 3, wherein the means for variation of the flow comprise two turbines (121), each turbine is adapted to supply said additional flow (f) in a single direction, said turbines being placed so that their additional flows (f) are in opposite directions.

6. Fibre forming device according to Claim 3, wherein the means for variation of the flow comprise two air injection nozzles (122) connected to an air compressor circuit (123) provided with valves (124), said air injection nozzles being arranged at the centre of the main pipe, said main pipe having a varying diameter enabling the creation of a reduced pressure.

7. Fibre forming device according to Claim 6, wherein said two air injection nozzles (122) are each placed at one end of the main pipe (111), said main pipe having at each end a greater diameter to enable the creation of the reduced pressure.

8. Fibre forming device according to Claim 3, wherein the means for variation of the flow comprise two annular air injection nozzles (125a) connected to an air compressor circuit (123) provided with valves, said annular air injection nozzles having an annular outlet generating an annular jet of air (j) and said annular air injection nozzles are such that the annular jet of air is diffused along the interior wall of the pipe enabling the creation of a reduced pressure.

9. Fibre forming device according to any one of Claims 3 to 8, wherein the second secondary pipe (113) comprises an interior wall (113b) and an exterior wall (113a) that are parallel and such as to have a U-shape profile with two parallel branches interconnected by a perpendicular branch (113c), the two parallel branches being open so that each enables the smoke to enter it, an opening being produced in line with the perpendicular branch for the connection of said second secondary pipe to the main pipe.

10. Fibre forming device according to any one of Claims 2 to 9, wherein said end circulation device (110) is adapted to modify the temperature at the junction of the top part and the annular part.

11. Fibre forming device according to any one of the preceding claims, further comprising a second means (220) for variation of the temperature of said spinner wheel arranged to face the bottom part of said spinner wheel.

12. Fibre forming device according to any one of Claims 2 to 11, wherein the top part is a web and the bottom part is an inner lip or in which the top part is an inner lip and the bottom part is a web.

13. Method for modification of the temperature of a fibre forming spinner wheel of a fibre forming device according to any one of Claims 2 to 12, **characterized in that** it comprises the following steps:
- measuring the temperature at a point of said spinner wheel by means of a measuring module (40);
- comparing the temperature measured by said measuring module (40) to a setpoint value;
- modifying the smoke evacuation flow (F) by generating an additional flow (f) in the main pipe added to or opposing said evacuation flow (F) by said air circulation device (110).

14. Method according to the preceding claim for modification of the temperature of a fibre forming spinner wheel, whereinsaid air circulation device (110) is adapted to modify the temperature at the junction of the top part and the annular wall.

15. Method according to either one of Claims 13 or 14 for modification of the temperature of a fibre forming spinner wheel of a fibre forming device **characterized in that** the flow is modified manually or automatically.

16. Method according to any one of Claims 13 to 15 for modification of the temperature of the fibre forming spinner wheel of a fibre forming device **characterized in that** the step of modification of the smoke evacuation flow (F) comprises a sequence of injection of an additional flow (f) added to said evacuation flow and/or a sequence of injection of an additional flow (f) opposing said evacuation flow (F).

17. Computer program including instructions for the execution of steps of a method according to any one of Claims 13 to 16 when said program is executed by a computer.

18. Computer-readable storage medium on which is stored a computer program comprising instructions for the execution of steps of a method according to any one of Claims 13 to 16.
